# EUROPEAN PATENT APPLICATION

(11) **EP 4 749 440 A1**
(43) Date of publication of application: **27.05.2026**
(21) Application number: 24858406.2
(22) Date of filing: 21.08.2024
(51) Int. Cl.: G06F 9/445, G06F 18/213, G06F 18/22, G06N 20/00

(54) **PARAMETER TUNING METHOD AND APPARATUS, AND DEVICE**

(30) Priority: 30.08.2023 CN 202311128697
(71) Applicant: Huawei Technologies Co., Ltd., Shenzhen, Guangdong 518129 (CN)
(72) Inventor: ZHENG, Pengfei, Shenzhen, Guangdong 518129 (CN); ZHENG, Weiyan, Shenzhen, Guangdong 518129 (CN); JI, Chenpeng, Shenzhen, Guangdong 518129 (CN); WANG, Tingkai, Shenzhen, Guangdong 518129 (CN)
(74) Representative: Goddar, Heinz J.
(86) International application number: PCT/CN2024/113660
(87) International publication number: WO 2025/044863

(57) **Abstract**

A parameter tuning method and apparatus, and a device are provided. In this application, the parameter tuning apparatus divides a high-dimensional parameter space based on one or more groups of software configuration parameters that are configured for software and a corresponding software performance parameter, to form M high-dimensional parameter subspaces, where the M high-dimensional parameter subspaces satisfy: a similarity between data in any one of the high-dimensional parameter subspaces is greater than a similarity threshold, and a difference between amounts of data included in any two of the high-dimensional parameter subspaces is not greater than an amount threshold; invokes M machine learning models to learn the M high-dimensional parameter subspaces respectively; and selects a target high-dimensional parameter subspace from the M high-dimensional parameter subspaces, determines a to-be-configured software configuration parameter by using a machine learning model corresponding to the target high-dimensional parameter subspace, and provides the software configuration parameter for a user. The high-dimensional parameter space is implemented through even division, to ensure that the machine learning model fully learns the high-dimensional parameter subspace, improve quality of the machine learning model, and ensure parameter tuning efficiency.

## Description

### CROSS-REFERENCE TO RELATED APPLICATIONS

This application claims priority to Chinese Patent Application No. 202311128697.6, filed with the China National Intellectual Property Administration on August 30, 2023 and entitled "PARAMETER TUNING METHOD AND APPARATUS, AND DEVICE", which is incorporated herein by reference in its entirety.

### TECHNICAL FIELD

This application relates to the field of communication technologies, and in particular, to a parameter tuning method and apparatus, and a device.

### BACKGROUND

Software configuration parameters usually need to be configured for some software running on a computing device, and the software can run only after the software configuration parameters are configured. The software configuration parameter configured for the software needs to adapt to performance of the computing device and a requirement of a user, so that it can be ensured that the software achieves optimal performance and meets the requirement of the user.

However, for some large-scale software such as a big data engine and a database, a very large quantity of software configuration parameters usually need to be configured for the software. As a result, there are a large quantity of different combinations of software configuration parameters. Performing tuning on the software configuration parameters and finding appropriate software configuration parameters, simply by analyzing the software configuration parameters by the user or software operation and maintenance personnel are extremely complex and difficult.

### SUMMARY

Embodiments of this application provide a parameter tuning method and apparatus, and a device, to efficiently determine an appropriate software configuration parameter, and improve parameter tuning efficiency.

According to a first aspect, an embodiment of this application provides a parameter tuning method. The method may be performed by a parameter tuning apparatus. In the method, the parameter tuning apparatus may obtain one or more groups of software configuration parameters that are configured for software and a software performance parameter corresponding to the one or more groups of software configuration parameters. Each group of software configuration parameters corresponds to a software performance parameter. A software performance parameter corresponding to one group of software configuration parameters represents performance of the software for which the group of software configuration parameters is configured.

The parameter tuning apparatus divides a high-dimensional parameter space based on the one or more groups of software configuration parameters and the corresponding software performance parameter that are obtained, to form M high-dimensional parameter subspaces. The high-dimensional parameter space is a high-dimensional space constructed based on all software configuration parameters that can be configured for the software and corresponding software performance parameters.

The M high-dimensional parameter subspaces satisfy: a similarity between data in any one of the high-dimensional parameter subspaces is greater than a similarity threshold, and a difference between amounts of data included in any two of the high-dimensional parameter subspaces is not greater than an amount threshold.

The parameter tuning apparatus invokes M machine learning models to learn the M high-dimensional parameter subspaces respectively. Each machine learning model corresponds to one high-dimensional parameter subspace.

The parameter tuning apparatus selects a target high-dimensional parameter subspace from the M high-dimensional parameter subspaces, determines one or more groups of to-be-configured software configuration parameters from the target high-dimensional parameter subspace by using a machine learning model corresponding to the target high-dimensional parameter subspace, and provides the one or more groups of to-be-configured software configuration parameters for a user.

According to the foregoing method, the parameter tuning apparatus can divide the high-dimensional parameter space into the M high-dimensional parameter subspaces with close sizes, to implement even division of the high-dimensional parameter space. The M high-dimensional parameter subspaces are obtained through even division, to ensure that the M machine learning models can fully learn corresponding high-dimensional parameter subspaces subsequently, ensure quality of the machine learning model, and ensure that one or more groups of appropriate software configuration parameters can be determined subsequently, so as to improve parameter tuning efficiency. In addition, a manner in which the M machine learning modules learns the M high-dimensional parameter subspaces respectively can improve efficiency of learning the high-dimensional parameter spaces, increase a learning speed, and further improve parameter tuning efficiency.

In a possible implementation, when dividing the high-dimensional parameter space based on the one or more groups of software configuration parameters and the corresponding software performance parameter, the parameter tuning apparatus may first use the one or more groups of software configuration parameters and the corresponding software performance parameter. Any element in the similarity matrix represents a similarity between two groups of software configuration parameters and corresponding software performance parameters. Any element represents a similarity between two groups of parameters, and any group of parameters includes a group of software configuration parameters and a software performance parameter corresponding to the group of software configuration parameters.

After the similarity matrix is generated, the parameter tuning apparatus invokes a spectral clustering algorithm to divide the high-dimensional parameter space based on the similarity matrix.

According to the foregoing method, a manner of dividing the high-dimensional parameter space by using the spectral clustering algorithm and the similarity matrix can effectively ensure that a plurality of groups of parameters with high similarities are aggregated together, to form the high-dimensional parameter subspaces.

In a possible implementation, when constructing the similarity matrix, the parameter tuning apparatus may perform similarity measurement on the one or more groups of software configuration parameters and the corresponding software performance parameter by using a kernel function, to generate the similarity matrix.

According to the foregoing method, the similarity between the one or more groups of software configuration parameters and the corresponding software performance parameter can be measured in a simple and efficient manner by using the kernel function, to quickly generate the similarity matrix.

In a possible implementation, when performing similarity measurement on the one or more groups of software configuration parameter and the corresponding software performance parameter by using the kernel function, the parameter tuning apparatus separately performs two types of measurement. One type of measurement is similarity measurement performed on the one or more groups of software configuration parameters, and the other type of measurement is similarity measurement performed on software performance corresponding to the one or more groups of software configuration parameters. Then, the similarity matrix is generated based on results of the two types of measurement. A proportion of a result of similarity measurement performed on the software performance corresponding to the one or more groups of software configuration parameters in the similarity matrix may be increased, to highlight the proportion of the result of similarity measurement performed on the software performance corresponding to the one or more groups of software configuration parameters.

For example, the parameter tuning apparatus may perform similarity measurement on the one or more groups of software configuration parameters by using the kernel function, to generate a first similarity matrix. Any element in the similarity matrix represents a similarity between two groups of software configuration parameters.

The parameter tuning apparatus may perform similarity measurement on software performance corresponding to the one or more groups of software configuration parameters by using the kernel function, to generate a second similarity matrix. Any element in the similarity matrix represents a similarity between software performance corresponding to the two groups of software configuration parameters.

The parameter tuning apparatus performs weighted summation on configuration of the first similarity matrix and the second similarity matrix to generate the similarity matrix. A weight of the second similarity matrix is greater than a weight of the first similarity matrix.

According to the foregoing method, when the similarity matrix is generated, the proportion of the result of similarity measurement performed on the software performance corresponding to the one or more groups of software configuration parameters in the similarity matrix is increased, that is, a larger weight is set for the second similarity matrix, to avoid overwhelming a software performance parameter during subsequent learning of the high-dimensional parameter subspaces, and ensure that learning of a corresponding high-dimensional parameter subspace by the machine learning model is supervised learning, so that a relationship between the software configuration parameter and the software performance parameter can be accurately analyzed.

In a possible implementation, when invoking the M machine learning models to learn the M high-dimensional parameter subspaces respectively, the parameter tuning apparatus may perform dimension reduction on the M high-dimensional parameter subspaces through manifold learning, and invoke the M machine learning models to learn the M high-dimensional parameter subspaces on which dimension reduction is performed respectively.

According to the foregoing method, dimension reduction is performed on the M high-dimensional parameter subspaces, so that an amount of data that needs to be learned when the machine learning model learns the high-dimensional parameter subspace can be reduced, and learning efficiency can be improved. In addition, there are many manifold learning manners. For example, dimension reduction may be performed on the M high-dimensional parameter subspaces through LE. In this way, in LE, the similarity matrix generated when the high-dimensional parameter space is divided may be reused, to improve efficiency of the dimension reduction.

In a possible implementation, when determining the one or more groups of to-be-configured software configuration parameters from the target high-dimensional parameter subspace by using the machine learning model corresponding to the target high-dimensional parameter subspace, the parameter tuning apparatus may determine, from the target high-dimensional parameter subspace by using a conjugate direction method, one or more groups of software configuration parameters that maximize an output of the machine learning model corresponding to the target high-dimensional parameter subspace.

According to the foregoing method, the conjugate direction method can ensure that an optimal solution of the machine learning model corresponding to the target high-dimensional parameter subspace is quickly found from the target high-dimensional parameter subspace.

In a possible implementation, when selecting the target high-dimensional parameter subspace from the M high-dimensional parameter subspaces, the parameter tuning apparatus invokes a Thompson sampling algorithm or an upper confidence bound algorithm to select the target high-dimensional parameter subspace from the M high-dimensional parameter subspaces.

According to the foregoing method, a multi-armed bandit algorithm including the Thompson sampling algorithm or the upper confidence bound algorithm can be used to accurately evaluate "potential" of the M high-dimensional parameter subspaces, and find a target high-dimensional parameter subspace that is most likely to include an optimal solution.

In a possible implementation, when providing the one or more groups of to-be-configured software configuration parameters for the user, the parameter tuning apparatus may further prompt the user to select a group of software configuration parameters from the one or more groups of to-be-configured software configuration parameters. The parameter tuning apparatus detects a selection operation of the user, determines a group of software configuration parameters selected by the user, and records the group of software configuration parameters. In this embodiment of this application, the parameter tuning apparatus may provide the one or more groups of to-be-configured software configuration parameters for the user via a parameter collection apparatus, and collect, via the parameter collection apparatus, a group of software configuration parameters selected by the user.

According to the foregoing method, the parameter tuning apparatus interacts with the user (via the parameter collection apparatus), so that the parameter tuning apparatus can display one or more optional groups of software configuration parameters to the user in time, and can further accurately obtain a group of software configuration parameters selected by the user.

In a possible implementation, the parameter tuning apparatus may prompt the user to input a software performance parameter corresponding to the group of software configuration parameters selected by the user, to obtain the software performance parameter corresponding to the group of software configuration parameters. In this embodiment of this application, the parameter tuning apparatus may prompt, via the parameter collection apparatus, the user to input the software performance parameter corresponding to the group of software configuration parameters selected by the user, and collect, via the parameter collection apparatus, the software performance parameter corresponding to the group of software configuration parameters input by the user.

According to the foregoing method, the parameter tuning apparatus interacts with the user (via the parameter collection apparatus), so that the software performance parameter corresponding to the software configuration parameters can be obtained in time.

According to a second aspect, an embodiment of this application further provides a parameter tuning apparatus. The parameter tuning apparatus has a function of implementing a behavior in the method example in the first aspect. For beneficial effects, refer to the descriptions in the first aspect. Details are not described herein again. The function may be implemented by hardware, or may be implemented by executing corresponding software by hardware. The hardware or software includes one or more modules corresponding to the foregoing functions. In a possible design, in a structure of the apparatus, a division module, a learning module, and a screening module are included. These modules may perform corresponding functions in the method example in the first aspect. For details, refer to detailed descriptions in the method example. Details are not described herein again.

According to a third aspect, this application further provides a computing device. The computing device includes a processor and a memory, and may further include a communication interface. The processor executes program instructions in the memory to perform the method provided in any one of the first aspect or the possible implementations of the first aspect. The memory is coupled to the processor, and the memory stores a program instruction and data that are necessary in a process of determining parameter tuning. The communication interface is configured to communicate with another device, for example, send one or more groups of software configuration parameters that are configured for software and a corresponding software performance parameter, or send one or more groups of to-be-configured software configuration parameters.

According to a fourth aspect, this application provides a computing device system. The computing device system includes at least one computing device. Each computing device includes a memory and a processor. The processor of the at least one computing device is configured to access code in the memory to perform the method according to any one of the first aspect or the possible implementations of the first aspect.

According to a fifth aspect, this application provides a computer-readable storage medium. When the computer-readable storage medium is executed by a computing device, the computing device performs the method provided in any one of the first aspect or the possible implementations of the first aspect. The storage medium stores a program. The storage medium includes but is not limited to a volatile memory, for example, a random access memory, and a nonvolatile memory, for example, a flash memory, a hard disk drive (hard disk drive, HDD), or a solid-state drive (solid-state drive, SSD).

According to a sixth aspect, this application provides a computing device program product. The computing device program product includes computer instructions. When the computer instructions are executed by a computing device, the computing device performs the method provided in any one of the first aspect or the possible implementations of the first aspect. The computer program product may be a software installation package. When the method provided in any one of the first aspect or the possible implementations of the first aspect needs to be used, the computer program product may be downloaded and executed on the computing device.

According to a seventh aspect, this application further provides a computer chip. The chip is connected to a memory. The chip is configured to read and execute a software program stored in the memory, to perform the method provided in any one of the first aspect and the possible implementations of the first aspect.

### BRIEF DESCRIPTION OF DRAWINGS

FIG. 1 is a diagram of a structure of a parameter tuning system according to this application;
FIG. 2A to FIG. 2C are diagrams of deployment of a parameter tuning system according to this application;
FIG. 3 is a flowchart of a parameter tuning method according to this application;
FIG. 4A is a diagram of a software configuration parameter display interface according to this application;
FIG. 4B is a diagram of a software performance parameter configuration interface according to this application;
FIG. 5 is a diagram of a structure of a parameter tuning apparatus according to this application;
FIG. 6 to FIG. 8 are diagrams of structures of a computing device according to embodiments of this application; and
FIG. 9 is a flowchart of another parameter tuning method according to this application.

### DESCRIPTION OF EMBODIMENTS

Before a parameter tuning method provided in embodiments of this application is described, some concepts in embodiments of this application are first described.

### (1) Software configuration parameter and software performance parameter

In this embodiment of this application, a parameter required for running software is referred to as a software configuration parameter, and the software configuration parameter is a type of parameter that affects software performance. A parameter that can reflect software performance is referred to as a software performance parameter.

Before the software runs normally, the software configuration parameter needs to be set for the software. Then, the software can start to run based on the software configuration parameter to complete related tasks. Performance of the software in a running process based on the software configuration parameter may be represented by the software performance parameter. The software configuration parameter corresponds to the software performance parameter.

Different quantities of software configuration parameters need to be configured for different types of software and have different parameter attributes. For software such as a big data engine and a database, to ensure running of this type of software, hundreds of software configuration parameters are usually set for this type of software. Different software configuration parameters are configured for the software, and performance of the software is also different. The performance of the software is not only related to the software configuration parameter, but also constrained by performance of a computing device in which the software is located. If same software runs on different computing devices, performance of the software is also different even if the software is configured with same software configuration parameters. The performance of the computing device usually refers to a computing capability of the computing device. The performance of the software refers to a capability of the software to execute a related task, and may be specifically reflected in a delay of the software, or accuracy or a success rate of an output result of the software.

An objective of configuring the software configuration parameter for the software is to achieve a better software configuration parameter for the software within a range allowed by performance of a computing device on which the software runs.

In embodiments of this application, the parameter tuning method performed by a parameter tuning apparatus is to perform tuning on a software configuration parameter, to obtain a group of software configuration parameters that can effectively improve software performance. Because there are usually a plurality of software configuration parameters for software running, for ease of description, a plurality of software configuration parameters that are set each time for software running are referred to as a group of software configuration parameters.

For the software performance parameter, any parameter that can reflect the software performance may be used as the software performance parameter. A specific generation manner of the software performance parameter is not limited in embodiments of this application. For example, a specific software performance evaluation algorithm is set, and the software performance parameter may be obtained by using the software performance evaluation algorithm based on a running state of the software. For another example, the software performance parameter is set by a user of the software, that is, a user of the software.

In the parameter tuning method provided in embodiments of this application, the software performance parameter is a main basis for performing tuning on the software configuration parameter. A quantity of software performance parameters corresponding to each group of software configuration parameters is not limited in embodiments of this application, and the quantity of software performance parameters is related to a generation manner of the software performance parameters. In embodiments of this application, only an example in which each group of software configuration parameters corresponds to one software performance parameter is used for description. Actually, during actual application, each group of software configuration parameters may alternatively correspond to a plurality of software performance parameters. In this case, the parameter tuning method is similar to the parameter tuning method in which each group of software configuration parameters may correspond to one software performance parameter, and a difference lies only in a quantity of software performance parameters.

### (2) Kernel function

A kernel function is a function that is used to obtain a returned dot product of a vector in a feature space based on a vector in an original space as an input vector. A conversion function from the original space to the feature space is ϕ(x), and x represents the vector in the original space.

The kernel function K(p,q) may be expressed as K(p,q)=ϕ(p),ϕ(q).

Data may be mapped to a high-dimensional space (which generally refers to the feature space) by using the kernel function. In this case, a comparison between the data may be converted into a comparison between dot products.

There are many types of kernel functions, for example, a linear kernel (linear kernel) function, where the linear kernel function K(p,q) may be expressed as: K(p,q)=pT q+c, c is a constant, and T indicates transposition; and
a polynomial kernel (polynomial kernel) function, where the polynomial kernel function K(p,q) may be expressed as: K(p,q)=(αpT q+c)^{d}, d represents a degree of a polynomial, c may be 0 or 1, and α is a hyperparameter.

In the kernel function K(p,q), although ϕ(p) and ϕ(q) are involved, during actual calculation of K(p,q), K(p,q) may be obtained by using ϕ(p) and ϕ(q). Alternatively, the kernel function K(p,q) may be directly solved. For example, K(p,q) is directly calculated by using an expression of the linear kernel function. In this way, a vector in the original space can be directly guided to the high-dimensional space.

### (3) Machine learning (Machine learning)

Machine learning is a "learning" method that specializes in the study of computers to obtain new knowledge or skills by simulating or implementing human learning behaviors. The machine learning is used to study and construct a special "model" to enable a computing device to learn from data for prediction by running the model.

In simple words, the "model" studied and constructed based on the machine learning may be understood as a function. The function herein is expressed as y=F(x). The function is constructed, based on the machine learning, through learning of data (where generally, learned data may also be referred to as sample data). After the learning is completed, y may be obtained by inputting x into the function, and y is a prediction result of x.

A process of learning the data may be considered as a process of constructing the function. For example, a parameter of the function is adjusted, to ensure that a constructed function can comply with a potential rule of the sample data, so that the function can be extended to data other than the sample data.

It can be learned that a learning process determines quality of the model. A model with higher quality has a stronger prediction capability, that is, an output (that is, y) of the model is more accurate.

In embodiments of this application, a model constructed based on the machine learning is referred to as a machine learning model. There are many types of machine learning models, such as linear regression (linear regression), logistic regression (logistic regression), linear discriminant analysis (linear discriminant analysis), a decision tree (decision tree), naive Bayes (Bayes theorem), k-nearest neighbors (K-nearest neighbors), learning vector quantization (learning vector quantization), a support vector machine (support vector machine), and a random forest (random forest).

### (4) High-dimensional parameter space

In embodiments of this application, a high-dimensional space formed by all groups of software configuration parameters that can be configured for software and a software performance parameter corresponding to each group of software configuration spaces is referred to as a high-dimensional parameter space. A size of the high-dimensional parameter space is related to a value range of each software configuration parameter.

The high-dimensional parameter space is a data space. Each group of software configuration parameters and a software performance parameter corresponding to each group of software configuration spaces are data in the data space. The high-dimensional parameter space may be considered as a "data set" including an infinite quantity or a large quantity of high-dimensional vectors. Any high-dimensional vector (x,y) represents a group of software configuration parameters and a software performance parameter corresponding to the group of software configuration parameters, and is a "space point" in the high-dimensional parameter space. x refers to a group of software configuration parameters, and y refers to a software performance parameter corresponding to the group of software configuration parameters.

It should be noted that, in the high-dimensional parameter space, y in a high-dimensional vector does not necessarily represent a real and collected software performance parameter corresponding to a collected group of software configuration parameters, and y represents a possible value of the software performance parameter. Extending this to a machine learning model, x in the high-dimensional vector is an input of the machine learning model, and y in the high-dimensional vector is an output of the machine learning model.

In embodiments of this application, one or more groups of software configuration parameters that are collected by a parameter collection apparatus and that are configured for software and a software performance parameter corresponding to the one or more groups of software configuration parameters belong to the high-dimensional parameter space, and are "space points" in the high-dimensional parameter space.

An objective of a parameter tuning apparatus is to find, from the high-dimensional parameter space, one or more groups of optimal software configuration parameters that can be configured for the software. A parameter tuning method performed by the parameter tuning apparatus may be understood as an "optimal solution" solving method.

### (5) Spectral clustering (Spectral Clustering) algorithm

A spectral clustering algorithm may also be referred to as a spectral clustering algorithm. The spectral clustering algorithm is a simple clustering algorithm. In the spectral clustering algorithm, data that needs to be classified is considered as nodes in a graph. In the graph, an edge between nodes that are close to each other has a high weight, and an edge between nodes that are away from each other has a low weight. The graph is partitioned to form a plurality of subgraphs. A weight of each edge between the plurality of subgraphs needs to be as small as possible, and an edge in a same subgraph needs to be as large as possible.

In the spectral clustering algorithm, an affinity matrix (for example, K_{XY} described in embodiments of this application) that can be used to describe a similarity between data that needs to be classified needs to be set for the data, an eigenvalue and an eigenvector of the affinity matrix need to be calculated, and then an appropriate eigenvector is selected to describe the data.

### (6) Manifold (manifold) learning

A manifold is a collective term of general geometric objects, and covers curves and surfaces in various dimensions. Manifold learning is a dimension reduction method. A set of data belonging to a high-dimensional space may be re-represented in a low-dimensional space through manifold learning.

In the manifold learning, it is considered that processed data is obtained through sampling on a manifold (where the data may be considered as a point on the manifold), or for processed data, there is a potential manifold that can cover the processed data.

Because points on the manifold do not have specific coordinates, to represent the points on the manifold, the points on the manifold may be placed in an ambient space (ambient space), and coordinates in the ambient space are used to represent the points on the manifold.

Therefore, the manifold learning may be summarized as follows: When some geometric features of the points on the manifold are retained, a group of corresponding intrinsic coordinates (intrinsic coordinates) are found, and the manifold is expanded in the low-dimensional space as well as possible. The intrinsic coordinates in the low-dimensional space are also referred to as intrinsic features (intrinsic features). A dimension in the ambient space is referred to as an observation dimension, represented as natural coordinates, and referred to as an observation in statistics.

Common manifold learning methods include isometric mapping (Isomap), locally linear embedding (Locally Linear Embedding, LLE), Laplacian eigenmap (Laplacian Eigenmap, LE), and locality preserving projection (Locality Preserving Projection, LPP).

Using LE as an example, a basic idea of LE is to use an undirected weighted graph to describe a manifold, and find a low-dimensional representation through graph embedding (graph embedding). In other words, a graph formed by the points on the manifold is mapped from the high-dimensional space to the low-dimensional space while a local adjacency relationship of the graph is maintained.

In embodiments of this application, when dimension reduction is performed on a high-dimensional parameter subspace or a high-dimensional parameter space, dimension reduction may be implemented in a manifold learning manner. A specific manner of the manifold learning that is used is not limited in embodiments of this application. Any manifold learning method that can be used to perform dimension reduction on the high-dimensional parameter subspace or the high-dimensional parameter space is applicable to embodiments of this application.

### (7) Eigen decomposition (Eigen decomposition)

Eigen decomposition is also referred to as spectral decomposition (Spectral decomposition). Through eigen decomposition, a matrix can be decomposed into a product of a matrix constructed by using an eigenvalue and an eigenvector of the matrix.

For example, A is an N×N square matrix, and A has N linearly independent eigenvectors. In this case, the eigen decomposition is performed on the matrix A:

A=QΛQ⁻¹.

Q is an N×N square matrix, and an i^{th} column of Q is an eigenvector of A. A is a diagonal matrix, and elements on a diagonal of A are eigenvalues corresponding to eigenvectors.

### (8) Thompson sampling (Thompson Sampling) algorithm and upper confidence bound (Upper Confidence Bound) algorithm

A Thompson sampling algorithm is an algorithm that uses a Bayes formula to evaluate a sample that is more likely to be optimal. In embodiments of this application, potential of M high-dimensional parameter subspaces may be evaluated by using the Thompson sampling algorithm, and a high-dimensional parameter subspace with the highest potential is selected from the M high-dimensional parameter subspaces. The "potential" means that a probability that one or more groups of software configuration parameters that can significantly improve software performance exist in the high-dimensional parameter subspace is high.

An upper confidence bound algorithm is to calculate, based on a statistics idea, an average gain corresponding to each "selection" (action, which may also be understood as an action of selecting a plurality of pieces of data) in all experimental data and a standard deviation thereof, to obtain a confidence interval through calculation. An upper limit of a confidence bound is a maximum gain that can be obtained through the selection. This upper confidence bound is used as an estimated value for a report of each "selection". In embodiments of this application, the potential of the M high-dimensional parameter subspaces may be evaluated by using the upper confidence bound algorithm (to be specific, each high-dimensional parameter subspace may be understood as a selection), and the high-dimensional parameter subspace with the highest potential is selected from the M high-dimensional parameter subspaces. The "potential" means that a probability that one or more groups of software configuration parameters that can significantly improve software performance exist in the high-dimensional parameter subspace is high.

The Thompson sampling algorithm and the upper confidence bound algorithm are two specific algorithms in multi-armed bandit (multi-armed bandit) algorithms. Only the Thompson sampling algorithm and the upper confidence bound algorithm are used herein as an example for description. In embodiments of this application, when a target high-dimensional parameter subspace is determined, another multi-armed bandit (multi-armed bandit) algorithm may also be used.

### (9) Conjugate direction method (conjugate direction method)

A conjugate direction method is a method for finding an unconstrained optimal solution along a conjugate direction. The conjugate direction method is a collective term of such methods for finding an optimal solution based on the conjugate direction. Common conjugate direction methods include a conjugate gradient (Conjugate Gradient) method and Powell's method (Powell's Method).

In simple words, a process of finding an optimal solution by using the conjugate direction method is as follows: For a high-dimensional space (for example, the high-dimensional parameter space and the high-dimensional parameter subspace described in embodiments of this application), n conjugate vectors may be selected as "base vectors" of an n-dimensional space. For a function defined in the high-dimensional space (where for example, the machine learning model described in embodiments of this application may be considered as a special "function"), straight-line search is performed along each "base vector". Therefore, the optimal solution of the function can be obtained by performing at most n searches.

In embodiments of this application, a parameter tuning apparatus 200 obtains one or more groups of software configuration parameters that are configured for software and a software performance parameter corresponding to the one or more groups of software configuration parameters, and divides a high-dimensional parameter space into M high-dimensional parameter subspaces based on the one or more groups of software configuration parameters and the software performance parameter corresponding to the one or more groups of software configuration parameters. A similarity between data included in any one of the high-dimensional parameter subspaces is greater than a similarity threshold, a difference between amounts of data included in any two of the high-dimensional parameter subspaces is not greater than a data threshold, and M is a positive integer.

The parameter tuning apparatus 200 invokes M machine learning models to learn the M high-dimensional parameter subspaces respectively. Each machine learning model corresponds to one high-dimensional parameter subspace.

The parameter tuning apparatus 200 selects a target high-dimensional parameter subspace from the M high-dimensional parameter subspaces, determines one or more groups of to-be-configured software configuration parameters by using a machine learning model corresponding to the target high-dimensional parameter subspace, and provides the one or more groups of to-be-configured software configuration parameters for a user.

When dividing the high-dimensional parameter space, the parameter tuning apparatus 200 divides the high-dimensional parameter space into M high-dimensional parameter subspaces with close sizes, to ensure that a same amount of data is subsequently learned by each machine learning model. Therefore, each machine learning model can fully understand a relationship between each group of software configuration parameters in a corresponding high-dimensional parameter space and a software performance parameter corresponding to the group of software configuration parameters, so that the machine learning model can achieve high quality, and subsequently, one or more groups of software configuration parameters that can effectively improve software performance can be determined.

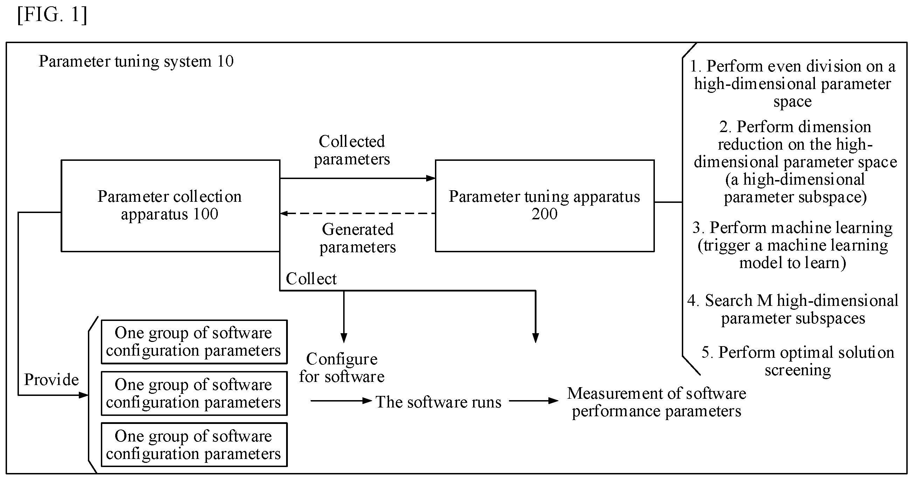

FIG. 1 is a diagram of a structure of a parameter tuning system according to an embodiment of this application. The parameter tuning system 10 includes a parameter collection apparatus 100 and a parameter tuning apparatus 200.

The parameter collection apparatus 100 may collect software configuration parameters that are configured for software and software performance parameters corresponding to the software configuration parameters.

For a user, the parameter collection apparatus 100 may provide one or more groups of configurable software configuration parameters for the user. The one or more groups of software configuration parameters may be transmitted by the parameter tuning apparatus 200 to the parameter collection apparatus 100. The parameter collection apparatus 100 may alternatively obtain one or more groups of software configuration parameters that are configured for the software, and record the group of software configuration parameters.

After the software runs based on one group of software configuration parameters, the parameter collection apparatus 100 may collect a software performance parameter corresponding to the group of software configuration parameters.

The parameter collection apparatus 100 transmits, to the parameter tuning apparatus 200, one or more collected groups of software configuration parameters and the software performance parameter corresponding to the one or more collected groups of software configuration parameters.

The parameter tuning apparatus 200 may perform the parameter tuning method provided in embodiments of this application. After obtaining the one or more groups of software configuration parameters and the software performance parameter corresponding to the one or more groups of software configuration parameters from the parameter collection apparatus 100, the parameter tuning apparatus 200 may output, based on the one or more groups of software configuration parameters and the software performance parameter corresponding to the one or more groups of software configuration parameters, one or more groups of new software configuration parameters that can improve software performance, and transmit the one or more groups of software configuration parameters to the parameter collection apparatus 100.

In this embodiment of this application, the parameter tuning apparatus 200 needs to have some or all of the following functions.

### Function 1: Function of evenly dividing a high-dimensional parameter space

The parameter tuning apparatus 200 can divide a high-dimensional parameter space into M high-dimensional parameter subspaces with close sizes. The M high-dimensional parameter subspaces satisfy: a similarity between data included in any one of the high-dimensional parameter subspaces is not greater than a similarity threshold, and a difference between amounts of data included in any two of the high-dimensional parameter subspaces is not greater than an amount threshold. Specific values of the similarity threshold and the amount threshold are related to a manner in which the parameter tuning apparatus 200 divides the high-dimensional parameter space.

Through even division of the high-dimensional parameter space, it can be ensured that high-dimensional vectors can be evenly distributed in the M high-dimensional parameter subspaces, and data skew in the M high-dimensional parameter subspaces (where in other words, sizes of the high-dimensional parameter subspaces are significantly different) is avoided, to ensure an effect of learning the M high-dimensional parameter subspaces by the machine learning models subsequently.

### Function 2: Function of performing dimension reduction on a high-dimensional parameter space (or a high-dimensional parameter subspace)

The parameter tuning apparatus 200 can reduce a dimension of the high-dimensional parameter space (or the high-dimensional parameter subspace), and reduce dimensions of high-dimensional vectors in the high-dimensional parameter space (or the high-dimensional parameter subspace).

The dimension of the high-dimensional parameter space (or the high-dimensional parameter subspace) is reduced, so that a speed of learning the high-dimensional parameter subspaces by machine learning models subsequently can be increased, and learning efficiency can be improved.

### Function 3: Machine learning function

The parameter tuning apparatus 200 can invoke M machine learning models to trigger the M machine learning models to learn the M high-dimensional parameter subspaces respectively. Each machine learning model corresponds to one high-dimensional parameter subspace, and each machine learning model learns a corresponding M high-dimensional parameter subspace.

Through the machine learning model, a potential relationship between a software configuration parameter and a software performance parameter can be better understood, and it is ensured that one or more groups of better software configuration parameters can be found subsequently. The parameter tuning apparatus 200 can invoke a plurality of machine learning models, so that efficiency of learning on an entire high-dimensional parameter space can be improved. In addition, each machine learning model learns only one of the high-dimensional parameter subspaces, so that quality of the machine learning model can be ensured.

### Function 4: Search function for M high-dimensional parameter subspaces

The parameter tuning apparatus 200 can search the M high-dimensional parameter subspaces for a target high-dimensional parameter subspace. The target high-dimensional parameter subspace is a high-dimensional parameter subspace with the highest "potential" in the M high-dimensional parameter subspaces. The "potential" means that a probability that one or more groups of software configuration parameters that can maximize software performance exist in the target high-dimensional parameter subspace is the highest.

The parameter tuning apparatus 200 may search the M high-dimensional parameter subspaces for the target high-dimensional parameter subspace by using an upper confidence bound (Upper Confidence Bound, UCB) algorithm or a Thompson sampling method.

### Function 5: Optimal solution screening function

The parameter tuning apparatus 200 may find one or more groups of software configuration parameters that maximize the software performance parameters from the high-dimensional parameter subspace via a conjugate direction optimizer. A maximum value reached by the software performance parameter herein is a maximum value that can be reached by the software performance parameter in the high-dimensional parameter subspaces.

In this embodiment of this application, after the target high-dimensional parameter subspace is determined, the parameter tuning apparatus 200 finds one or more groups of software configuration parameters that maximize the software performance parameters from the target high-dimensional parameter subspace via the conjugate direction optimizer, that is, finds one or more groups of software configuration parameters that can maximize an output of a machine learning model corresponding to the target high-dimensional parameter space.

Deployment manners of the parameter collection apparatus 100 and the parameter tuning apparatus 200 are not limited in this embodiment of this application. This embodiment of this application provides three deployment manners.

### Manner 1: Deployment close to a user side

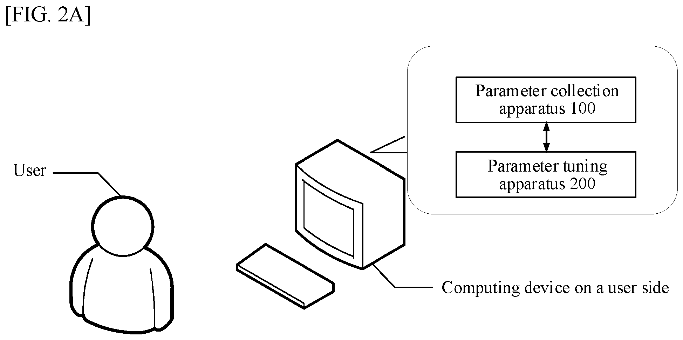

As shown in FIG. 2A, the parameter collection apparatus 100 and the parameter tuning apparatus 200 are deployed at a location close to a user. The parameter collection apparatus 100 and the parameter tuning apparatus 200 may be deployed on a computing device on the user side, to provide a parameter tuning function for the user. The computing device may be a notebook computer, a personal desktop computer, a mobile terminal of the user, or the like.

The parameter collection apparatus 100 serves as a "front end" of the parameter tuning system 10, interacts with the user, provides one or more optional groups of software configuration parameters for the user, and may further collect one or more groups of software configuration parameters that are configured for software and a software performance parameter corresponding to the one or more groups of software configuration parameters.

The parameter tuning apparatus 200 serves as a "back end" of the parameter tuning system 10, outputs one or more groups of new software configuration parameters based on the one or more groups of software configuration parameters and the software performance parameter corresponding to the one or more groups of software configuration parameters that are obtained from the parameter collection apparatus 100, and provides the one or more groups of software configuration parameters for the user via the parameter collection apparatus 100.

The parameter collection apparatus 100 and the parameter tuning apparatus 200 may be hardware apparatuses. For example, the parameter collection apparatus 100 or the parameter tuning apparatus 200 may be a processor in the computing device, a part of modules in a processor, or an accelerator card in the computing device. The parameter collection apparatus 100 and the parameter tuning apparatus 200 may alternatively be software modules. For example, the parameter collection apparatus 100 or the parameter tuning apparatus 200 may be software running on a processor or an accelerator card in the computing device.

### Manner 2: Distributed deployment

The parameter collection apparatus 100 may be deployed at a location close to a user. The parameter tuning apparatus 200 may be deployed at a location away from the user.

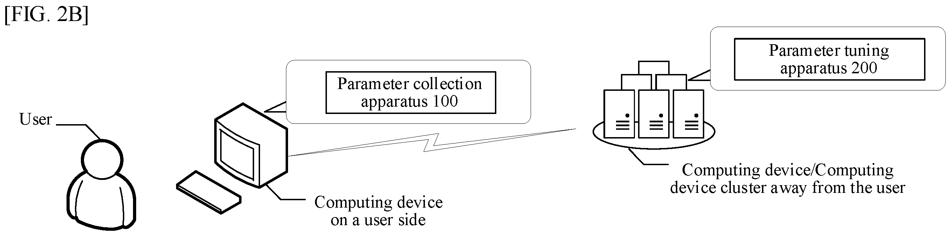

As shown in FIG. 2B, the parameter collection apparatus 100 is deployed on a computing device on a user side, interacts with the user, and collects one or more groups of software configuration parameters and a software performance parameter corresponding to the one or more groups of software configuration parameters.

The parameter tuning apparatus 200 is deployed on another computing device or a computing device cluster, and the another computing device may be a server with strong computing power. The computing device cluster includes a plurality of computing devices, and the plurality of computing devices cooperate to implement functions of the parameter tuning apparatus 200.

The parameter collection apparatus 100 is connected to the parameter tuning apparatus 200 via a network. The parameter collection apparatus 100 may transmit one or more collected groups of software configuration parameters and a software performance parameter corresponding to the one or more collected groups of software configuration parameters to the parameter tuning apparatus 200 via the network. The parameter tuning apparatus 200 may transmit one or more groups of generated new software configuration parameters (namely, one or more groups of to-be-configured software configuration parameters) to the parameter collection apparatus 100 via the network.

### Manner 3: Deployment away from a user side

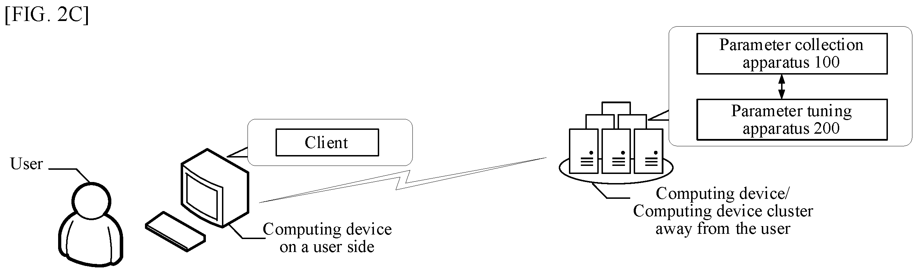

As shown in FIG. 2C, the parameter collection apparatus 100 and the parameter tuning apparatus 200 are deployed at a location away from a user. The user may interact with the parameter collection apparatus 100 via a computing device on the user side, to obtain one or more groups of software configuration parameters that can be configured for software, or may transmit, to a data parameter apparatus via a computing device on the user side, one or more groups of software configuration parameters that are configured for software and a software performance parameter corresponding to the one or more groups of software configuration parameters.

For example, the parameter collection apparatus 100 and the parameter tuning apparatus 200 may be deployed on a cloud, and provide a cloud service used for tuning of a software configuration parameter. The parameter collection apparatus 100 or the parameter tuning apparatus 200 may be deployed in an edge data center, may be deployed in a cloud data center, or may be deployed on a terminal computing device. The parameter collection apparatus 100 or the parameter tuning apparatus 200 may alternatively be deployed in some or all environments of an edge data center, a cloud data center, and a terminal computing device in a distributed manner.

The user may subscribe to the cloud service, and install, on the computing device on the user side, client software used for data transmission with the parameter collection apparatus 100. The user may request one or more available groups of software configuration parameters from the parameter collection apparatus 100 by using the client software, or may feed back, to the parameter collection apparatus 100 by using the client software, one or more groups of configured software configuration parameters and a software performance parameter corresponding to the one or more groups of configured software configuration parameters.

The parameter collection apparatus 100 can provide one or more groups of software configuration parameters obtained from the parameter tuning apparatus 200 for the user by using the client software, or may send, to the parameter tuning apparatus 200, the one or more groups of software configuration parameters transmitted from the client software and the software performance parameter corresponding to the one or more groups of software configuration parameters.

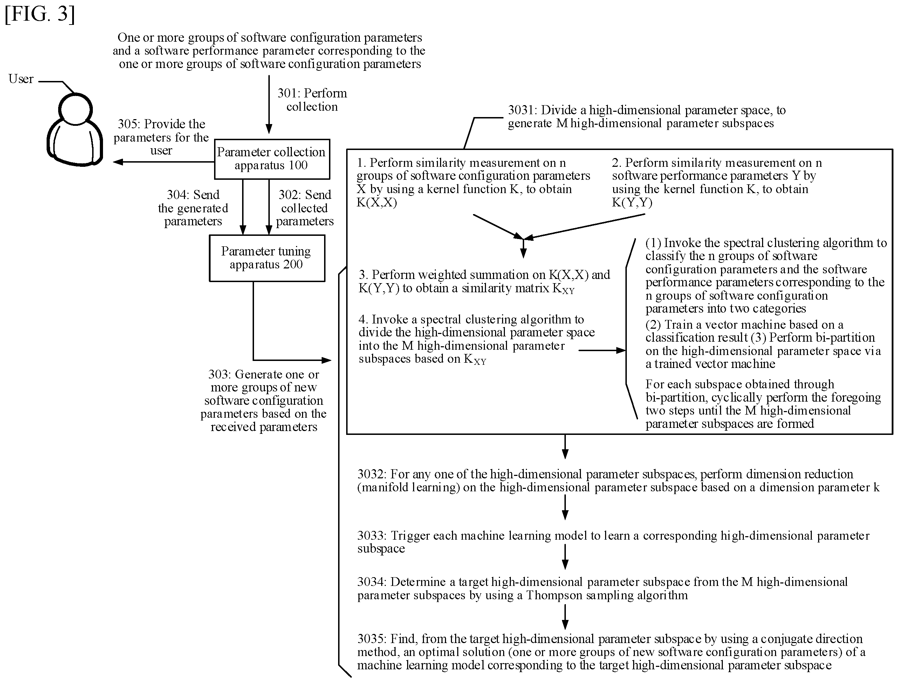

With reference to FIG. 3, the following describes a parameter tuning method provided in an embodiment of this application. The method includes the following steps.

Step 301: A parameter collection apparatus 100 collects one or more groups of software configuration parameters and a software performance parameter corresponding to the one or more groups of software configuration parameters.

A manner in which the parameter collection apparatus 100 performs step 301 is not limited in this application. The following lists several possible manners.
(1) The parameter collection apparatus 100 may interact with a user through a visual interface, to obtain, from the user, one or more groups of software configuration parameters and a software performance parameter corresponding to the one or more groups of software configuration parameters. Only a manner in which the user obtains one group of software configuration parameters and a software performance parameter corresponding to the group of software configuration parameters is used herein as an example for description. Each group of software configuration parameters and a software performance parameter corresponding to the group of software configuration parameters may be both collected in a similar manner.

First, for the user, the parameter collection apparatus 100 may display a visual software configuration parameter interface to the user. The user views one or more optional groups of software configuration parameters by browsing the software configuration parameter display interface, and selects a group of software configuration parameters that needs to be set for software on the software configuration parameter display interface.

Then, after detecting a selection operation performed by the user on the one or more groups of software configuration parameters, the parameter collection apparatus 100 determines the group of software configuration parameters selected by the user.

Then, the group of software configuration parameters is set for the software, and the software runs based on the software configuration parameters. An operation of configuring the group of software configuration parameters for the software herein may be performed by the parameter collection apparatus 100, or may be performed by the user. For example, the user configures the selected group of software configuration parameters for the software.

After the software runs based on the software configuration parameters, the parameter collection apparatus 100 may collect a software performance parameter corresponding to the group of software configuration parameters.

The software performance parameter may be provided by the user for the parameter collection apparatus 100. For example, a quantization manner for reflecting software performance is agreed upon with the user in advance. Based on the quantization manner, the user determines a specific quantized value based on a state of the software in a running process, and the quantized value may be used as a software performance parameter. The parameter collection apparatus 100 displays a visual software performance parameter input interface to the user. The user may input, based on a prompt of the software performance parameter input interface, a software performance parameter corresponding to the group of software configuration parameters.

The software performance parameter may alternatively be measured by the parameter collection apparatus 100. For example, the parameter collection apparatus 100 has a built-in algorithm for generating the software performance parameter. In a process in which the software runs based on the software configuration parameters, the parameter collection apparatus 100 may invoke the algorithm to obtain the software performance parameter corresponding to the group of software configuration parameters.

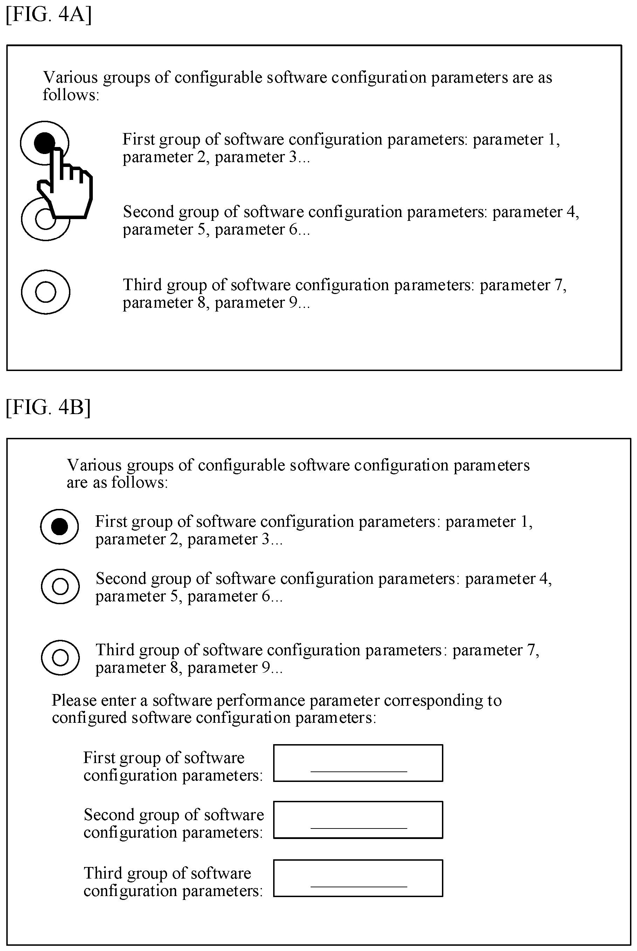

FIG. 4A is a diagram of an interface for displaying a software configuration parameter according to an embodiment of this application. On the interface, three optional groups of software configuration parameters and a name of each group of software configuration parameters are displayed. A user can view each group of software configuration parameters on the interface. The user can select one or more groups of software configuration parameters through checking.

FIG. 4B is a diagram of a software performance parameter input interface according to an embodiment of this application. On the interface, a group of software configuration parameters selected by a user is displayed, and the user is prompted to enter a software performance parameter corresponding to the group of software configuration parameters.

(2) The parameter collection apparatus 100 interacts with a user by using an email, a short message service message, or the like, to obtain, from the user, one or more groups of software configuration parameters and a software performance parameter corresponding to the one or more groups of software configuration parameters.

The parameter collection apparatus 100 may provide one or more optional groups of software configuration parameters for the user by using an email, a short message service message, or the like. After providing the one or more optional groups of software configuration parameters for the user, the parameter collection apparatus 100 may request, from the user by using an email, a short message service message, or the like, the one or more groups of software configuration parameters that are configured for software and a software performance parameter corresponding to the one or more groups of software configuration parameters.

Step 302: The parameter collection apparatus 100 sends, to a parameter tuning apparatus 200, one or more collected groups of software configuration parameters and a software performance parameter corresponding to the one or more collected groups of software performance parameters.

When the parameter collection apparatus 100 and the parameter tuning apparatus 200 are deployed on a same computing device (for example, in the foregoing manner of deployment close to a user side), the parameter collection apparatus 100 and the parameter tuning apparatus 200 may directly interact with each other, to transfer the one or more groups of software configuration parameters and the software performance parameter corresponding to the one or more groups of software configuration parameters.

When the parameter collection apparatus 100 and the parameter tuning apparatus 200 are deployed on different computing devices (for example, in the foregoing manner of distributed deployment), the parameter collection apparatus 100 and the parameter tuning apparatus 200 may interact with each other via a network, to transfer the one or more groups of software configuration parameters and the software performance parameter corresponding to the one or more groups of software configuration parameters.

Step 303: The parameter tuning apparatus 200 performs tuning based on the one or more groups of software configuration parameters and the software performance parameter corresponding to the one or more groups of software configuration parameters, to generate one or more groups of new software configuration parameters.

When performing step 303, the parameter tuning apparatus 200 may specifically perform the following step:
Step 3031: The parameter tuning apparatus 200 divides a high-dimensional parameter space to generate M high-dimensional parameter subspaces. The M high-dimensional parameter subspaces satisfy: a similarity between data included in any one of the high-dimensional parameter subspaces is greater than a similarity threshold, and a difference between amounts of data included in any two of the high-dimensional parameter subspaces is not greater than an amount threshold.

A manner in which the parameter tuning apparatus 200 performs step 3031 is not limited in this embodiment of this application. The following describes a division manner of the high-dimensional parameter space provided in this embodiment of this application.

It is assumed herein that n groups of software configuration parameters collected by the parameter collection apparatus 100 are respectively X1, X2, X3, ..., and Xn. X1, X2, X3, ..., or Xn may be considered as a vector including a plurality of elements, and each element is one software configuration parameter. A plurality of software configuration parameters Y corresponding to the n groups of software configuration parameters are respectively Y1, Y2, Y3, ..., and Yn. Y1, Y2, Y3, ..., or Yn may be considered as a scalar.

The n groups of software configuration parameters may be constructed into a matrix X, that is, X=[X1, X2, ..., Xn]. The n software performance parameters may be constructed into a vector Y, that is, Y=[Y1, Y2, ..., Yn].

Step 1: Perform similarity measurement on the n groups of software configuration parameters X by using a kernel function K, to obtain a first similarity matrix K(X,X), where K(X,X) represents a similarity between any two groups of software configuration parameters, K(X,X) is an n*n matrix S1, and an element in the matrix S1 represents a similarity between the two groups of software configuration parameters X. For example, an element s1ᵢⱼ in the matrix S1 represents a similarity between one group of software configuration parameters Xi and another group of software configuration parameters Xj, where i and j are respectively a row number and a column number of the element s1.

Step 2: Perform similarity measurement on the n software performance parameters Y by using the kernel function K, to obtain a second similarity matrix K(Y,Y), where K(Y,Y) represents a similarity between any two software performance parameters, K(Y,Y) is an n*n matrix S2, and an element in the matrix S2 represents a similarity between the two software performance parameters. For example, an element s2ᵢⱼ in the matrix S2 represents a similarity between a software performance parameter Yi and a software configuration parameter Yj, where i and j are respectively a row number and a column number of the element s2.

Step 3: Perform weighted summation on K(X,X) and K(Y,Y) to obtain a similarity matrix K_{XY}.

K_{XY}=ρK(X,X)+βK(Y,Y), where ρ and β are weights that are set for K(X,X) and K(Y,Y).

Step 4: Invoking a spectral clustering (Spectral Clustering) algorithm to divide the high-dimensional parameter space into M high-dimensional parameter subspaces based on K_{XY}.

Details are as follows: (1) Invoke the spectral clustering algorithm to perform spectral clustering on the n groups of software configuration parameters and the software performance parameters corresponding to the n groups of software configuration parameters based on K_{XY}, and classify the n groups of software configuration parameters and the software performance parameters corresponding to the n groups of software configuration parameters into two categories.

(2) Train a vector machine based on a classification result in (1), that is, categories to which the n groups of software configuration parameters and the software performance parameters corresponding to the n groups of software configuration parameters belong. One group of software configuration parameters is used as an input of the vector machine, and a category to which the group of software configuration parameters and a software performance parameter corresponding to the group of software configuration parameters belong is used as an output of the vector machine.

(3) Perform dichotomization on the high-dimensional parameter space via a trained vector machine obtained in 2 to obtain two spaces, where each space obtained through bi-partition herein is referred to as a level-1 subspace for ease of description.

(4) For any level-1 subspace, invoke the spectral clustering algorithm to perform, based on K_{XY}, spectral clustering on a plurality of groups of software configuration parameters and software performance parameters corresponding to the plurality of groups of software configuration parameters that belong to the level-1 subspace and that are in the n groups of software configuration parameters and the software performance parameters corresponding to the n groups of software configuration parameters, and classify the plurality of groups of software configuration parameters and the software performance parameters corresponding to the plurality of groups of software configuration parameters that belong to the level-1 subspace into two categories. An execution manner in (4) is similar to that in (1), and a difference lies only in that a quantity of groups of software configuration parameters and a quantity of software performance parameters corresponding to the groups of software configuration parameters that need to be classified are different.

(5) Train the vector machine based on a classification result in (4), that is, categories to which the plurality of groups of software configuration parameters and the software performance parameters corresponding to the plurality of groups of software configuration parameters belonging to the level-1 subspace belong. One group of software configuration parameters and a software performance parameter corresponding to the group of software configuration parameters are used as an input of the vector machine, and a category to which the group of software configuration parameters and the software performance parameter corresponding to the group of software configuration parameters belong is used as an output of the vector machine.

(6) Continue to perform bi-partition on the level-1 subspace via a trained vector machine obtained in (5), to obtain two level-2 subspaces.

Bi-partition may be performed on any level-2 subspace, and a manner of performing bi-partition on any level-2 subspace is similar to a manner of performing bi-partition on any level-1 subspace. For details, refer to the foregoing content.

Bi-partition is performed on any space obtained through each time of bi-partition, until M spaces are finally formed. The M spaces are M high-dimensional parameter subspaces.

It is already mentioned in the foregoing descriptions that the n groups of software configuration parameters and the software performance parameters corresponding to the n groups of software configuration parameters that are obtained by the parameter tuning apparatus 200 are only some "space points" in the high-dimensional parameter space, and division of the high-dimensional parameter space is division of all "space points" included in the high-dimensional parameter space. The high-dimensional parameter space is divided by drawing a "division line" in the high-dimensional parameter space, to obtain different high-dimensional parameter subspaces through division. When the high-dimensional parameter space is divided by using the spectral clustering (Spectral Clustering) algorithm, clustering is first performed on the n groups of software configuration parameters and the software performance parameters corresponding to the n groups of software configuration parameters, so that the vector machine learns this clustering manner. In this way, provided that any group of software configuration parameters and a software performance parameter corresponding to the group of software configuration parameters are input to a trained vector machine, the trained vector machine can output a category to which the group of software configuration parameters and the corresponding software performance parameter belong. The trained vector machine has a function of drawing the "division line". In addition, in the foregoing content, a bi-partition manner is mentioned, that is, a space is divided into two spaces through each time of division. In this division manner, uniformity of divided spaces can be ensured better. After bi-partition is performed for a plurality of times, M high-dimensional parameter subspaces with close sizes may be obtained.

A manner of invoking the spectral clustering (Spectral Clustering) algorithm to divide the high-dimensional parameter space can ensure that sizes of M finally obtained high-dimensional parameter subspaces are even, to ensure a success rate of space division. In addition, in a division process, a kernel function is used to measure a similarity between various groups of software configuration parameters and a similarity between various software performance parameters. In this way, it can be ensured that software configuration parameters with a high similarity are centralized in a same high-dimensional parameter subspace, and software performance parameters with a high similarity belong to a same high-dimensional parameter subspace. In addition, different weights are configured for K(X,X) and K(Y,Y) when Kxy is formed. To avoid overwhelming a software performance parameter or not highlighting an importance degree of the software performance parameter due to a large quantity of software configuration parameters in each group, the high-dimensional parameter space is divided based on Kxy obtained through weighting, and impact of the software performance parameter is fully considered, so that division of the high-dimensional parameter space is more appropriate, it is further ensured that a machine learning model can learn the high-dimensional parameter subspace, and quality of the machine learning model is improved.

After the M high-dimensional parameter subspaces are obtained by evenly dividing the high-dimensional parameter space, step 3032 may be performed.

Step 3032: For any one of the high-dimensional parameter subspaces, the parameter tuning apparatus 200 performs dimension reduction on the high-dimensional parameter subspace based on a dimension parameter k. A dimension of the high-dimensional parameter subspace on which dimension reduction is performed satisfies the dimension parameter k.

A dimension of the high-dimensional parameter subspace is a dimension of a high-dimensional vector in the high-dimensional parameter subspace. Performing dimension reduction on the high-dimensional parameter subspace means that a dimension of any high-dimensional vector in the high-dimensional parameter subspace is reduced.

There are many manners in which the parameter tuning apparatus 200 performs dimension reduction on the high-dimensional parameter subspace based on the dimension parameter to make the dimension of the high-dimensional parameter subspace on which dimension reduction is performed satisfy the dimension parameter.

For example, a dimension of any high-dimensional vector in the high-dimensional parameter subspace is l+k. For any high-dimensional vector in the high-dimensional parameter subspace, the parameter tuning apparatus 200 may delete 1 elements before an (1+k)^{th} element included in the high-dimensional vector, and a dimension of the high-dimensional vector after the element is removed is K.

For another example, for any high-dimensional vector in the high-dimensional parameter subspace, the parameter tuning apparatus 200 may perform pairwise summation on a plurality of elements included in the high-dimensional vector, and a sum value of two elements is used as one element in a high-dimensional vector on which dimension reduction is performed. If a dimension of a high-dimensional vector obtained through the pairwise summation is still greater than k, the parameter tuning apparatus 200 may continue to perform pairwise summation on a plurality of elements included in a high-dimensional vector obtained through the pairwise summation, until a dimension of a high-dimensional vector obtained through the pairwise summation is equal to K.

In this embodiment of this application, the parameter tuning apparatus 200 may perform dimension reduction on the high-dimensional parameter subspace through manifold learning. An example in which the parameter tuning apparatus 200 performs dimension reduction on the high-dimensional parameter subspace through LE is used herein for description. First, the parameter tuning apparatus 200 may perform eigen decomposition (Eigen decomposition) on K_{XY} to obtain a plurality of eigenvalues and eigenvectors corresponding to the eigenvalues. Then, k largest eigenvalues are selected in the eigenvalues to obtain k corresponding eigenvectors, and the k eigenvectors are used as base vectors of a data space. Then, the high-dimensional parameter subspace is mapped to a k-dimensional data space by using the k base vectors, and the k-dimensional data space is the high-dimensional parameter subspace on which dimension reduction is performed.

Through step 3032, the dimension of the high-dimensional parameter subspace can be reduced, an amount of data included in the high-dimensional parameter subspace can be reduced, a speed of learning the high-dimensional parameter subspace by the machine learning model can be increased, and learning efficiency of the machine learning model can be ensured. When dimension reduction is performed on the high-dimensional parameter subspace in a manifold learning manner, valid data in the high-dimensional parameter subspace can be retained, and invalid data or data of low importance can be filtered out, so that it is ensured that the machine learning model can accurately learn the high-dimensional parameter subspace subsequently, and quality of the machine learning model is improved.

In the foregoing descriptions, an example in which step 3031 is performed before step 3032 is used for description. During actual application, dimension reduction may be first performed on the high-dimensional parameter space based on the dimension parameter (where a manner of performing dimension reduction on the high-dimensional parameter space based on the dimension parameter is similar to that of performing dimension reduction on the high-dimensional subspace in step 3032. For details, refer to the foregoing content. The details are not described herein again). Then, a high-dimensional parameter space on which dimension reduction is performed is divided (where a manner of evenly dividing the high-dimensional parameter space on which dimension reduction is performed is similar to that of evenly dividing the high-dimensional parameter space in step 3031. For details, refer to the foregoing content. The details are not described herein again).

It should be noted that step 3032 is an optional step. During actual application, dimension reduction may not be performed on the high-dimensional parameter space, and step 3033 is directly performed. Only step 3032 is used herein as an example for description. For brevity of description, the high-dimensional parameter subspace mentioned in subsequent steps is the high-dimensional parameter subspace on which dimension reduction is performed.

Step 3033: The parameter tuning apparatus 200 allocates one corresponding high-dimensional parameter subspace to each machine learning model, and triggers the machine learning model to learn the corresponding high-dimensional parameter subspace.

The machine learning model is a preconfigured machine learning model, one group of software configuration parameters represented by a high-dimensional vector in the high-dimensional parameter subspace is used as an input of the machine learning model, and a software configuration parameter corresponding to the group of software configuration parameters is used as an output of the machine learning model. Each time one group of software configuration parameters is input, the machine learning model outputs a corresponding software configuration parameter.

A process in which the machine learning model learns data in a corresponding high-dimensional parameter subspace is an iterative process in which a parameter of the machine learning model is continuously adjusted by using each group of software configuration parameters and a software configuration parameter corresponding to the group of software configuration parameters. An "iteration" means that each time one group of software configuration parameters is input to the machine learning model, a parameter of the machine learning model is adjusted by using software configuration output by the machine learning model. One iteration means a process in which one group of software configuration parameters is input to the machine learning model, and a parameter of the machine learning model is adjusted by using software configuration output by the machine learning model.

The parameter tuning apparatus 200 may configure a convergence condition for the machine learning model. When the machine learning model learns data in the corresponding high-dimensional parameter subspace, the learning is stopped if the convergence condition is satisfied. Specific content of the convergence condition is not limited in this embodiment of this application. For example, the convergence condition may be a maximum quantity of iterations. When a quantity of iterations for learning data in a corresponding high-dimensional parameter subspace by the machine learning model reaches the maximum quantity of iterations, the learning is stopped. For another example, the convergence condition may alternatively be maximum learning duration. When duration of learning data in a corresponding high-dimensional parameter subspace by the machine learning model reaches the maximum learning duration, the learning is stopped. Any condition that can control the machine learning model to stop learning of the high-dimensional vector in the corresponding high-dimensional parameter subspace may be used as the convergence condition.

In addition, a specific manner of learning the high-dimensional vector in the corresponding high-dimensional parameter subspace by the machine learning model varies with a type of the machine learning model. The type of the machine learning model is not limited in this application. The machine learning model may be linear regression (linear regression), logistic regression (logistic regression), linear discriminant analysis (linear discriminant analysis), a decision tree (decision tree), naive Bayes (Bayes theorem), k-nearest neighbors (K-nearest neighbors), learning vector quantization (learning vector quantization), a support vector machine (support vector machine), or a random forest (random forest).

When the machine learning model is the random forest, a C4.5 algorithm may be invoked to learn a corresponding high-dimensional parameter subspace. When the machine learning model is the linear regression, a kernel function method may be invoked to learn a corresponding high-dimensional parameter subspace.

After the M machine learning models learn the corresponding high-dimensional parameter subspaces, any machine learning model can predict, for one group of software configuration parameters represented by any high-dimensional vector in a corresponding high-dimensional parameter subspace, a software performance parameter corresponding to the group of software configuration parameters. A better learning effect of the machine learning model indicates higher quality of the machine learning model, so that a software performance parameter predicted by the machine learning model is more accurate, and is closer to a real software performance parameter generated after the software runs based on the group of software configuration parameters.

In any one of the M high-dimensional parameter subspaces, probabilities of one or more groups of software configuration parameters that can maximize a software performance parameter are different, in other words, probabilities of one or more groups of software configuration parameters that can enable software performance to be optimal are different in any one of the high-dimensional parameter subspaces. "A maximum value that can be reached by the software performance parameter" or "an optimal state that can be reached by the software performance" herein is constrained by a specific factor. The factor includes but is not limited to: quality of a current machine learning model, distribution of the M high-dimensional parameter subspaces in the high-dimensional parameter space, and a computing capability of an invoked algorithm (for example, a conjugate method, a spectral clustering algorithm, manifold learning, a Thompson sampling algorithm, or an upper confidence bound algorithm). Therefore, the one or more groups of software configuration parameters that can maximize the software performance parameters mentioned in embodiments of this application are one or more groups of software configuration parameters that can enable "the software performance parameter to reach a maximum value" or "the software performance to reach an optimal state" under constraints of these factors.

An objective for performing tuning on a software configuration parameter by the parameter tuning apparatus 200 is to find the one or more groups of software configuration parameters. Therefore, the parameter tuning apparatus 200 needs to find, from the M high-dimensional parameter subspaces, a high-dimensional parameter subspace including one or more groups of software configuration parameters that can significantly improve software performance. The parameter tuning apparatus 200 needs to perform step 3034.

Step 3034: The parameter tuning apparatus 200 determines a target high-dimensional parameter subspace from the M high-dimensional parameter subspaces by using the Thompson sampling algorithm (Thompson Sampling) or the upper confidence bound algorithm. The target high-dimensional parameter subspace is a high-dimensional parameter subspace having the highest potential in the M high-dimensional parameter subspaces, and is a high-dimensional parameter subspace, with a highest probability, including one or more groups of software configuration parameters that can maximize the software performance parameter in the M high-dimensional parameter subspaces.

A prerequisite is that the high-dimensional parameter space is divided by using the spectral clustering (Spectral Clustering) algorithm, to form the M high-dimensional parameter subspaces. Because the high-dimensional parameter subspace is divided level by level in a bi-partition manner, a bi-partition process of the high-dimensional parameter space may be represented by using a binary tree. A root node in the binary tree represents the high-dimensional parameter space, and bi-partition is performed on each node starting from the root node from top to bottom, to obtain two nodes through division, until M leaf nodes are finally formed. Each leaf node represents one high-dimensional parameter subspace. Statistical quantities of the M leaf nodes are evaluated by using the UCB, and the statistical quantity of each leaf node represents a probability, calculated based on the UCB, that one or more groups of software configuration parameters that maximize the software performance parameter exist in a space represented by the leaf node. The statistical quantity may be understood as "potential" of the space represented by the leaf node.

A leaf node with a largest statistical quantity is selected from the M leaf nodes, and a high-dimensional parameter subspace represented by the leaf node is the target high-dimensional parameter subspace.

Step 3035: The parameter tuning apparatus 200 finds, from the target high-dimensional parameter subspace by using the conjugate direction method, an optimal solution of a machine learning model corresponding to the target high-dimensional parameter subspace, where the optimal solution refers to one or more groups of software configuration parameters that can maximize a software performance parameter.

In this way, the parameter tuning apparatus 200 may perform step 304 for one or more groups of new software configuration parameters generated by the parameter tuning apparatus 200.

Step 304: The parameter tuning apparatus 200 transmits the one or more groups of generated software configuration parameters to the parameter collection apparatus 100. A manner in which the parameter tuning apparatus 200 transmits the one or more groups of generated software configuration parameters to the parameter collection apparatus 100 is similar to that in step 302 in which the parameter collection apparatus 100 sends, to the parameter tuning apparatus 200, the one or more collected groups of software configuration parameters and the software performance parameter corresponding to the one or more collected groups of software configuration parameters. For details, refer to the foregoing descriptions. Details are not described herein again.

Step 305: The parameter collection apparatus 100 displays the one or more groups of software configuration parameters to the user, and prompts the user to select one group of software configuration parameters to configure for the software.

In step 301, a manner in which the parameter collection apparatus 100 displays the one or more groups of software configuration parameters to the user is listed. For details, refer to the foregoing descriptions. Details are not described herein again.

After the user selects one group of software configuration parameters and configures the group of software configuration parameters for the software, the parameter collection apparatus 100 may further continue to collect the group of software configuration parameters and a software performance parameter corresponding to the group of software configuration parameters, and continue to perform step 301 to step 305. Step 301 to step 305 may be cyclically performed. Step 301 to step 305 are cyclically performed, so that the parameter tuning method performed by the parameter tuning apparatus 200 can be used to perform prediction (that is, predict one or more groups of new software configuration parameters) during learning. The parameter tuning apparatus 200 learns the one or more groups of software configuration parameters and a software performance parameter corresponding to the one or more groups of software configuration parameters that are obtained, and outputs one or more groups of new software configuration parameters. Then, one or more groups of software configuration parameters obtained subsequently and a software performance parameter corresponding to the one or more groups of software configuration parameters are learned, and then, one or more groups of new software configuration parameters are output. This process is repeated until a tuning stop condition is satisfied.

The tuning stop condition may be set by the user. Specific content of the tuning stop condition is not limited in this embodiment of this application. For example, the tuning stop condition may be a quantity, set by the user, of times that one or more groups of software configuration parameters are recommended, that is, a quantity of times that the parameter tuning apparatus 200 performs the parameter tuning method.

For another example, the tuning stop condition may be an indication initiated by the user and indicating to stop tuning. A manner of initiating the indication is not limited in this embodiment of this application. An example in which the parameter collection apparatus 100 may interact with the user through a visual interface is used. In the visual interface displayed by the parameter collection apparatus 100 to the user, an option of "Stop tuning" may be provided. The user sends, to the parameter collection apparatus 100 by clicking "Stop tuning", an indication indicating to stop tuning. After receiving the indication, the parameter collection apparatus 100 transmits the indication to the parameter tuning apparatus 200. After receiving the indication, the parameter tuning apparatus 200 stops performing the parameter tuning method.

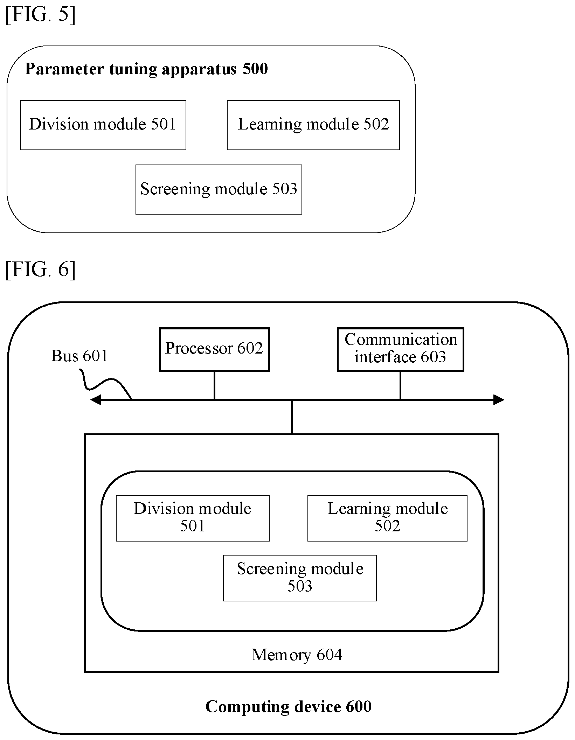

Based on a same inventive concept as the method embodiment, an embodiment of this application further provides a parameter tuning apparatus. The parameter tuning apparatus is configured to perform the method performed by the parameter tuning apparatus 200 in the foregoing method embodiment. As shown in FIG. 5, the parameter tuning apparatus 500 includes a division module 501, a learning module 502, and a screening module 503. Specifically, in the parameter tuning apparatus 500, a connection is established between modules by using a communication path.

The division module 501 is configured to divide a high-dimensional parameter space based on one or more groups of software configuration parameters that are configured for software and a corresponding software performance parameter, to form M high-dimensional parameter subspaces, where the software performance parameter corresponding to the group of software configuration parameters represents performance of the software for which the group of software configuration parameters is configured, the high-dimensional parameter space is a high-dimensional space constructed based on all software configuration parameters that can be configured for the software and corresponding software performance parameters, and the M high-dimensional parameter subspaces satisfy: a similarity between data in any one of the high-dimensional parameter subspaces is greater than a similarity threshold, a difference between amounts of data included in any two of the high-dimensional parameter subspaces is not greater than an amount threshold, and M is a positive integer.

The learning module 502 is configured to invoke M machine learning models to learn the M high-dimensional parameter subspaces respectively, where each machine learning model corresponds to one high-dimensional parameter subspace.

The screening module 503 is configured to: select a target high-dimensional parameter subspace from the M high-dimensional parameter subspaces, determine one or more groups of to-be-configured software configuration parameters from the target high-dimensional parameter subspace by using a machine learning model corresponding to the target high-dimensional parameter subspace, and provide the one or more groups of to-be-configured software configuration parameters for a user.

In a possible implementation, when dividing the high-dimensional parameter space, the division module 501 constructs a similarity matrix based on the one or more groups of software configuration parameters and the corresponding software performance parameter, where any element in the similarity matrix represents a similarity between two groups of software configuration parameters and corresponding software performance parameters; and then invokes a spectral clustering algorithm to divide the high-dimensional parameter space based on the similarity matrix.

In a possible implementation, when generating the similarity matrix, the division module 501 performs similarity measurement on the one or more groups of software configuration parameters and the corresponding software performance parameter by using a kernel function, to generate the similarity matrix.

In a possible implementation, when generating the similarity matrix by using the kernel function, the division module 501 performs similarity measurement on the one or more groups of software configuration parameters by using the kernel function, to generate a first similarity matrix, where any element in the similarity matrix represents a similarity between two groups of software configuration parameters. The division module 501 performs similarity measurement on software performance corresponding to the one or more groups of software configuration parameters by using the kernel function, to generate a second similarity matrix, where any element in the similarity matrix represents a similarity between software performance corresponding to the two groups of software configuration parameters. The division module 501 performs weighted summation on configuration of the first similarity matrix and the second similarity matrix to generate the similarity matrix, where a weight of the second similarity matrix is greater than a weight of the first similarity matrix.

In a possible implementation, when learning the M high-dimensional parameter subspaces, the learning module 502 performs dimension reduction on the M high-dimensional parameter subspaces through manifold learning, and invokes the M machine learning models to learn the M high-dimensional parameter subspaces on which dimension reduction is performed respectively.

In a possible implementation, the screening module 503 determines, from the target high-dimensional parameter subspace by using a conjugate direction method, one or more groups of software configuration parameters that maximize an output of the machine learning model corresponding to the target high-dimensional parameter subspace.

In a possible implementation, the screening module 503 invokes a Thompson sampling algorithm or an upper confidence bound algorithm to select the target high-dimensional parameter subspace from the M high-dimensional parameter subspaces.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in the form of hardware, or may be implemented in the form of a software functional module.

If the integrated module is implemented in the form of a software functional module and is sold or used as an independent product, the integrated module may be stored in a computer-readable storage medium. Based on such an understanding, the technical solutions of this application essentially, or the part contributing to the conventional technology, or all or a part of the technical solutions may be embodied in a form of a software product. The computer software product is stored in a storage medium, and includes several instructions for instructing a terminal device (which may be a personal computer, a mobile phone, a network device, or the like) or a processor (processor) to perform all or some steps of the method in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

This application further provides a computing device 600 shown in FIG. 6. The computing device 600 includes a bus 601, a processor 602, a communication interface 603, and a memory 604. The processor 602, the memory 604, and the communication interface 603 communicate with each other through the bus 601.

The processor 602 may be a central processing unit (central processing unit, CPU), or may be another general-purpose processor, a digital signal processing (digital signal processing, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like.

The memory 604 may use a dynamic random access memory (dynamic random access memory, DRAM). In addition to the DRAM, the memory 604 may alternatively be another random access memory, for example, a static random access memory (Static random access memory, SRAM). In addition, the memory 604 may alternatively be a read-only memory (read-only memory, ROM). For example, the read-only memory may be a programmable read-only memory (programmable read-only memory, PROM), an erasable programmable read-only memory (erasable programmable read-only memory, EPROM), or the like. The memory 604 may alternatively be a flash medium (FLASH), a hard disk drive (hard disk drive, HDD), a solid-state drive (solid-state drive, SSD), or the like. The memory 604 stores computer program instructions, and the processor 602 executes the computer program instructions to perform the steps performed by the parameter tuning apparatus in the method described in FIG. 3. The memory 604 may further include another software module (for example, a plurality of modules in the parameter tuning apparatus 500) required for another running process, such as an operating system. The operating system may be LINUX^{™}, UNIX^{™}, WINDOWS^{™}, or the like.

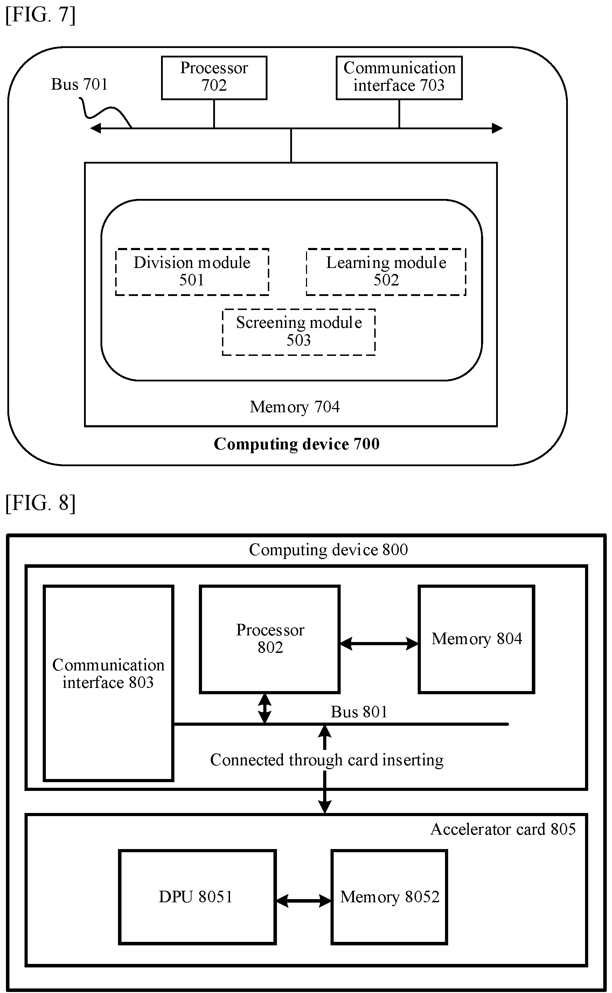

This application further provides a computing device system. The computing device system includes at least one computing device 700 shown in FIG. 7. The computing device 700 includes a bus 701, a processor 702, a communication interface 703, and a memory 704. The processor 702, the memory 704, and the communication interface 703 communicate with each other through the bus 701. The at least one computing device 700 in the computing device system performs communication by using a communication path.

For specific types of the processor 702 and the memory 704, refer to the related descriptions of the processor 602 and the memory 604. Details are not described herein again. The processor 702 executes computer program instructions stored in the memory 704, to perform some or all of the steps performed by the parameter tuning apparatus in the method described in FIG. 3. The memory may further include another software module required for another running process, such as an operating system. The operating system may be LINUX^{™}, UNIX^{™}, WINDOWS^{™}, or the like.

The at least one computing device 700 in the computing device system establishes communication with each other by using a communication network, and each computing device 700 runs any one or more modules in the parameter tuning apparatus 500.

In the foregoing descriptions of a deployment manner of the parameter tuning system, it is mentioned that the parameter collection apparatus and the parameter tuning apparatus may be deployed on a computing device on a user side. In terms of hardware implementation, the parameter tuning apparatus and the parameter collection apparatus may be a processor of the computing device, some modules of the processor, or an accelerator card of the computing device.

FIG. 8 is a diagram of a structure of a computing device in which an accelerator card is deployed according to an embodiment of this application. The computing device 800 includes a bus 801, a processor 802, a communication interface 803, a memory 804, and the accelerator card 805.

Functions and types of the bus 801, the processor 802, the communication interface 803, and the memory 804 are similar to those of the bus 601, the processor 602, the communication interface 603, and the memory 604 in the computing device shown in FIG. 6. For details, refer to the foregoing descriptions. Details are not described herein again.

A difference lies in that in the computing device shown in FIG. 8, the processor 802 no longer performs the steps performed by the parameter tuning apparatus in the method described in FIG. 3, but the accelerator card 805 performs the steps performed by the parameter tuning apparatus in the method described in FIG. 3.

The accelerator card 805 includes a data processing unit (data process unit, DPU) 8051 and a memory 8052. The DPU 8051 and the memory 8052 are connected by using a system bus. The system bus may be a peripheral component interconnect express (peripheral component interconnect express, PCIe) bus, or may be a bus of a compute express link (compute express link, CXL), a universal serial bus (universal serial bus, USB) protocol, or another protocol. The DPU 8051 may alternatively be replaced with another processor having a processing function, such as an ASCI or an FPGA. A type of the memory 8052 is similar to a type of the memory 604. For details, refer to the foregoing descriptions. The memory 8052 may store computer program instructions and data that are necessary in a process in which the accelerator card 805 performs the parameter tuning method.

The DPU 8051 is a main operation unit of the accelerator card 805, and is a core unit of the accelerator card 805. The DPU 8051 undertakes a main function of the accelerator card 805. For example, some functions of the computing device (for example, the processor) may be offloaded to the DPU 8051, and the DPU 8051 processes data, and executes a task that is assigned by the computing device to the accelerator card 805. The DPU 8051 invokes the computer program instructions in the memory 8052 to perform some methods that need to be performed by the parameter tuning apparatus in the embodiment shown in FIG. 3.

The following describes an execution procedure of the parameter tuning method in the computing device 800 by using an example in which the parameter collection apparatus is deployed on the processor 802 of the computing device 800 and the parameter tuning apparatus is the accelerator card 805 of the computing device 800.

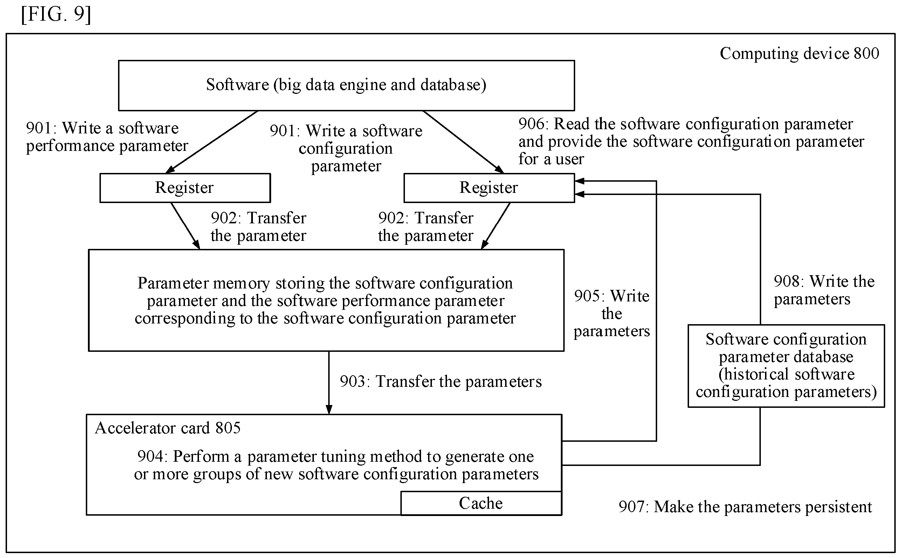

The computing device 800 on which the accelerator card 805 is deployed can provide a parameter tuning function for a user. The parameter tuning function may be enabled by default, that is, provided that the user performs a selection operation on a software configuration parameter, for example, selects a software configuration parameter in the interface shown in FIG. 4A, the computing device 800 automatically performs the parameter tuning method, and the computing device 800 automatically performs the embodiment shown in FIG. 9. The parameter tuning function may alternatively be controlled by the user whether the parameter tuning function is enabled. The user may use the parameter tuning function according to an actual requirement. For example, an option of "enable parameter tuning" is provided in a software configuration parameter interface presented by the computing device 800 to the user. The user clicks the option of enabling parameter tuning to deliver, by the processor 802 of the computing device 800, an instruction for enabling a parameter tuning function. After receiving the instruction, the processor 802 of the computing device 800 notifies the accelerator card 805 of enabling the parameter tuning function. In this case, the computing device 800 performs the embodiment shown in FIG. 9.

Step 901: The processor 802 on the computing device 800 first collects one or more groups of software configuration parameters that are configured for software and a software performance parameter corresponding to the one or more groups of software configuration parameters, and writes the one or more groups of software configuration parameters and the software performance parameter corresponding to the one or more groups of software configuration parameters into a register. The register may be the processor 802 inside the processor 802, or may be a register connected to the processor 802.

Step 902: The processor 802 on the computing device 800 transfers, to a parameter memory, the one or more groups of software configuration parameters and the software performance parameter corresponding to the one or more groups of software configuration parameters that are stored in the register, where the parameter memory is connected to the accelerator card 805 in the computing device 800, and the accelerator card 805 can extract data from the parameter memory. A type of the parameter memory is not limited in this embodiment of this application. Any memory that can have a data storage function is applicable to this embodiment of this application. The parameter memory may be a part of the memory 804 described above.

Step 903: The accelerator card 805 of the computing device 800 obtains the one or more groups of software configuration parameters and the software performance parameter corresponding to the one or more groups of software configuration parameters that are stored in a parameter memory.

Step 904: The accelerator card 805 of the computing device 800 generates one or more groups of new software configuration parameters based on the one or more groups of software configuration parameters and the software performance parameter corresponding to the one or more groups of software configuration parameters. For a specific manner of performing step 904 by the accelerator card 805 of the computing device 800, refer to step 303 in the embodiment shown in FIG. 3. Details are not described herein again.

Step 905: The accelerator card 805 of the computing device 800 writes the one or more groups of generated software configuration parameters into the register.

Step 906: The processor 802 of the computing device 800 reads the one or more groups of software configuration parameters from the register, and provides the one or more groups of new software configuration parameters for the user.

Optionally, the accelerator card 805 of the computing device 800 may further construct a software configuration parameter database, to store one or more groups of new software configuration parameters generated each time the parameter tuning method is executed. The software configuration parameter database may be deployed in a persistent memory, and the memory may be a memory that can store data persistently, such as an SSD or an SCM. The specific steps are as follows:

Step 907: The accelerator card 805 of the computing device 800 writes the one or more groups of new generated software configuration parameters into the software configuration parameter database.

A cache (cache) may be disposed in the accelerator card 805 of the computing device 800, and each time after the parameter tuning method is executed, one or more groups of new generated software configuration parameters are cached in the cache. When a data amount in the cache is large and reaches a data amount threshold, the accelerator card 805 of the computing device 800 makes the cache persistent to the software configuration parameter database.

Step 908: The processor 802 of the computing device 800 selects the one or more groups of software configuration parameters from the software configuration parameter database, and migrates the software configuration parameters to the register, to provide the software configuration parameters for the user.

For example, when the user suspends enabling the parameter tuning function of the computing device 800, the one or more groups of software configuration parameters provided by the processor 802 of the computing device 800 for the user may be the software configuration parameter database (what the software configuration parameter database stores is one or more groups of software configuration parameters generated by performing the parameter tuning method previously, that is, historical software configuration parameters).

For another example, when the user enables the parameter tuning function of the computing device 800, in addition to that the accelerator card 805 of the computing device 800 may write the one or more groups of generated new software configuration parameters into the register, the processor 802 of the computing device 800 may also select one or more groups of software configuration parameters from the software configuration parameter database and write the one or more groups of software configuration parameters into the register, and then provide the one or more groups of software configuration parameters stored in the register for the user.

The descriptions of procedures corresponding to the foregoing accompanying drawings have respective focuses. For a part of a procedure that is not described in detail, refer to related descriptions of another procedure.

All or some of the foregoing embodiments may be implemented by using software, hardware, firmware, or any combination thereof. When software is used to implement embodiments, all or some of embodiments may be implemented in a form of a computer program product. The computer program product includes computer program instructions. When the computer program instructions are loaded and executed on a computer, all or some procedures or functions in FIG. 3 in embodiments of the present invention are generated.

The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), or a semiconductor medium (for example, an SSD).

It is clearly that a person skilled in the art can make various modifications and variations to this application without departing from the scope of this application. In this way, provided that these modifications and variations made to this application fall within the scope of the claims of this application and equivalent techniques thereof, this application is also intended to cover such modifications and variations.

## Claims

1. A parameter tuning method, comprising:
dividing a high-dimensional parameter space based on one or more groups of software configuration parameters that are configured for software and a corresponding software performance parameter, to form M high-dimensional parameter subspaces, wherein a software performance parameter corresponding to one group of software configuration parameters represents performance of the software for which the group of software configuration parameters is configured, the high-dimensional parameter space is a high-dimensional space constructed based on all software configuration parameters that can be configured for the software and corresponding software performance parameters, and the M high-dimensional parameter subspaces satisfy: a similarity between data in any one of the high-dimensional parameter subspaces is greater than a similarity threshold, a difference between amounts of data comprised in any two of the high-dimensional parameter subspaces is not greater than an amount threshold, and M is a positive integer;
invoking M machine learning models to learn the M high-dimensional parameter subspaces respectively, wherein each machine learning model corresponds to one high-dimensional parameter subspace; and
selecting a target high-dimensional parameter subspace from the M high-dimensional parameter subspaces, determining one or more groups of to-be-configured software configuration parameters from the target high-dimensional parameter subspace by using a machine learning model corresponding to the target high-dimensional parameter subspace, and providing the one or more groups of to-be-configured software configuration parameters for a user.

2. The method according to claim 1, wherein dividing the high-dimensional parameter space based on the one or more groups of software configuration parameters that are configured for the software and the corresponding software performance parameter comprises:
constructing a similarity matrix based on the one or more groups of software configuration parameters and the corresponding software performance parameter, wherein any element in the similarity matrix represents a similarity between two groups of software configuration parameters and corresponding software performance parameters; and
invoking a spectral clustering algorithm to divide the high-dimensional parameter space based on the similarity matrix.

3. The method according to claim 2, wherein constructing the similarity matrix based on the one or more groups of software configuration parameters and the corresponding software performance parameter comprises:
performing similarity measurement on the one or more groups of software configuration parameters and the corresponding software performance parameter by using a kernel function, to generate the similarity matrix.

4. The method according to claim 3, wherein performing similarity measurement on the one or more groups of software configuration parameters and the corresponding software performance parameter by using the kernel function comprises:
performing similarity measurement on the one or more groups of software configuration parameters by using the kernel function, to generate a first similarity matrix, wherein any element in the similarity matrix represents a similarity between two groups of software configuration parameters; performing similarity measurement on software performance corresponding to the one or more groups of software configuration parameters by using the kernel function, to generate a second similarity matrix, wherein any element in the similarity matrix represents a similarity between software performance corresponding to the two groups of software configuration parameters; and
performing weighted summation on configuration of the first similarity matrix and the second similarity matrix to generate the similarity matrix, wherein a weight of the second similarity matrix is greater than a weight of the first similarity matrix.

5. The method according to any one of claims 1 to 4, wherein invoking the M machine learning models to learn the M high-dimensional parameter subspaces respectively comprises:
performing dimension reduction on the M high-dimensional parameter subspaces through manifold learning; and
invoking the M machine learning models to learn the M high-dimensional parameter subspaces on which dimension reduction is performed respectively.

6. The method according to any one of claims 1 to 5, wherein determining the one or more groups of to-be-configured software configuration parameters from the target high-dimensional parameter subspace by using the machine learning model corresponding to the target high-dimensional parameter subspace comprises:
determining, from the target high-dimensional parameter subspace by using a conjugate direction method, one or more groups of software configuration parameters that maximize an output of the machine learning model corresponding to the target high-dimensional parameter subspace.

7. The method according to any one of claims 1 to 6, wherein selecting the target high-dimensional parameter subspace from the M high-dimensional parameter subspaces comprises:
invoking a Thompson sampling algorithm or an upper confidence bound algorithm to select the target high-dimensional parameter subspace from the M high-dimensional parameter subspaces.

8. A parameter tuning apparatus, comprising:
a division module, configured to divide a high-dimensional parameter space based on one or more groups of software configuration parameters that are configured for software and a corresponding software performance parameter, to form M high-dimensional parameter subspaces, wherein a software performance parameter corresponding to one group of software configuration parameters represents performance of the software for which the group of software configuration parameters is configured, the high-dimensional parameter space is a high-dimensional space constructed based on all software configuration parameters that can be configured for the software and corresponding software performance parameters, and the M high-dimensional parameter subspaces satisfy: a similarity between data in any one of the high-dimensional parameter subspaces is greater than a similarity threshold, a difference between amounts of data comprised in any two of the high-dimensional parameter subspaces is not greater than an amount threshold, and M is a positive integer; a learning module, configured to invoke M machine learning models to learn the M high-dimensional parameter subspaces respectively, wherein each machine learning model corresponds to one high-dimensional parameter subspace; and
a screening module, configured to: select a target high-dimensional parameter subspace from the M high-dimensional parameter subspaces, determine one or more groups of to-be-configured software configuration parameters from the target high-dimensional parameter subspace by using a machine learning model corresponding to the target high-dimensional parameter subspace, and provide the one or more groups of to-be-configured software configuration parameters for a user.

9. The apparatus according to claim 8, wherein the division module is configured to:
construct a similarity matrix based on the one or more groups of software configuration parameters and the corresponding software performance parameter, wherein any element in the similarity matrix represents a similarity between two groups of software configuration parameters and corresponding software performance parameters; and
invoke a spectral clustering algorithm to divide the high-dimensional parameter space based on the similarity matrix.

10. The apparatus according to claim 9, wherein the division module is configured to:
perform similarity measurement on the one or more groups of software configuration parameters and the corresponding software performance parameter by using a kernel function, to generate the similarity matrix.

11. The apparatus according to claim 10, wherein the division module is configured to:
perform similarity measurement on the one or more groups of software configuration parameters by using the kernel function, to generate a first similarity matrix, wherein any element in the similarity matrix represents a similarity between two groups of software configuration parameters;
perform similarity measurement on software performance corresponding to the one or more groups of software configuration parameters by using the kernel function, to generate a second similarity matrix, wherein any element in the similarity matrix represents a similarity between software performance corresponding to the two groups of software configuration parameters; and
perform weighted summation on configuration of the first similarity matrix and the second similarity matrix to generate the similarity matrix, wherein a weight of the second similarity matrix is greater than a weight of the first similarity matrix.

12. The apparatus according to any one of claims 8 to 11, wherein the learning module is configured to:
perform dimension reduction on the M high-dimensional parameter subspaces through manifold learning; and
invoke the M machine learning models to learn the M high-dimensional parameter subspaces on which dimension reduction is performed respectively.

13. The apparatus according to any one of claims 8 to 12, wherein the screening module is configured to:
determine, from the target high-dimensional parameter subspace by using a conjugate direction method, one or more groups of software configuration parameters that maximize an output of the machine learning model corresponding to the target high-dimensional parameter subspace.

14. The apparatus according to any one of claims 8 to 13, wherein the screening module is configured to:
invoke a Thompson sampling algorithm or an upper confidence bound algorithm to select the target high-dimensional parameter subspace from the M high-dimensional parameter subspaces.

15. A computing device, wherein the computing device comprises a processor and a memory, wherein
the memory is configured to store computer program instructions; and
the processor invokes the computer program instructions in the memory, to perform the method according to any one of claims 1 to 7.

16. A computer-readable storage medium, wherein when the computer-readable storage medium is executed by a computing device, the computing device performs the method according to any one of claims 1 to 7.
